# EUROPÄISCHE PATENTSCHRIFT

(11) **EP 4 269 231 B1**
(45) Veröffentlichungstag und Bekanntmachung des Hinweises auf die Patenterteilung: **18.02.2026**
(21) Anmeldenummer: 22170815.9
(22) Anmeldetag: 29.04.2022
(51) Int. Cl.: B64C 1/40, B64C 1/06

(54) **ISOLIERUNGSANORDNUNG FÜR EIN FAHRZEUG MIT INTEGRIERTER LUFTLEITUNG**
INSULATING ASSEMBLY FOR VEHICLE WITH INTEGRATED AIR DUCT
DISPOSITIF D'ISOLATION POUR UN VÉHICULE À CONDUIT D'AIR INTÉGRÉ

(43) Veröffentlichungstag der Anmeldung: 01.11.2023
(73) Patentinhaber: Airbus Operations GmbH, 21129 Hamburg (DE)
(72) Erfinder: Frankenberger, Eckart, 21129 Hamburg (DE)
(74) Vertreter: LKGLOBAL Partnerschaftsgesellschaft mbB

(56) Entgegenhaltungen:
- WO-A1-2008/101986
- US-A- 5 577 688
- US-A1- 2009 189 018
- US-A1- 2021 086 888
- US-B1- 6 260 660

## Beschreibung

### Technisches Gebiet

Die vorliegende Beschreibung betrifft eine Isolierungsanordnung zum thermischen und akustischen Isolieren einer Wandung eines Flugzeugs sowie ein Flugzeug mit einer derartigen Isolierungsanordnung.

### Technischer Hintergrund

Der Rumpf eines Verkehrsflugzeugs weist üblicherweise eine Isolierungsanordnung auf, mit der eine in dem Rumpf angeordnete Passagierkabine thermisch und akustisch isoliert wird. Die Isolierungsanordnung umfasst oftmals eine Primär- und eine Sekundärisolierung, welche in Form von Isoliermatten mit einem bauschigem Material in einer Hülle zwischen der Rumpfwandung und einer Seitenverkleidung der Kabine realisiert ist.

Zur Klimatisierung der Kabine sind unter anderem Luftaustrittselemente vorgesehen, die beispielsweise oberhalb von Seitenverkleidungen angeordnet sind und mit Luft aus einem unterhalb des Fußbodens der Kabine angeordneten Klimatisierungssystem versorgt werden. Zum Leiten von Luft werden Steigleitungen eingesetzt, welche sich von einem fußbodennahen Bereich entlang der Innenseite der Rumpfwandung erstrecken und etwa an einem Rumpfspant entlang verlaufen und an die Isolierungsanordnung angrenzen. Derartige Steigleitungen sind zum Minimieren des Gewichts üblicherweise aus einem faserverstärkten Kunststoff hergestellt. Sie sind mit einer gewissen Vorsicht zu handhaben und zu installieren, um ihre Beschädigung zu verhindern. Die aufwändige Konstruktion der Steigleitungen ist indes mit hohen Materialkosten verbunden.

US 5 577 688 A beschreibt die akustische und thermische Isolierung eines geschlossenen Raumes, insbesondere der Passagierkabine eines Flugzeugs, welche aus Isolierelementen besteht, die die Innenwände auskleiden. Jedes Element ist in einem Beutel aus dünnem, flexiblem, feuchtigkeitsundurchlässigem Material eingeschlossen und jeder Beutel ist an der untersten Stelle mit einer Öffnung versehen, an der sich die aus der feuchten Luft im Beutel kondensierte Feuchtigkeit durch die Schwerkraft sammelt. Ein Kanal verbindet das Innere jedes Elements mit der Außenseite des umschlossenen Raums, sodass der Luftdruck im Beutel an den im Raum angeglichen werden kann, ohne dass Luft aus dem umschlossenen Raum verwendet werden muss. Eventuelles Kondensat im Beutel kann nach außen abfließen, lediglich Luft von außen kann in das Beutelinnere gelangen.

### Zusammenfassung der Erfindung

Es ist eine Aufgabe der Erfindung, eine alternative Ausführung von Steigleitungen vorzuschlagen, die möglichst kostengünstig, zuverlässig und robust sowie leicht zu installieren und zu handhaben ist.

Die Aufgabe wird gelöst durch eine Isolierungsanordnung mit den Merkmalen des unabhängigen Anspruchs 1. Vorteilhafte Ausführungsformen und Weiterbildungen sind den Unteransprüchen und der nachfolgenden Beschreibung zu entnehmen.

Es wird eine Isolierungsanordnung zum thermischen und akustischen Isolieren einer Wandung eines Flugzeugs vorgeschlagen, aufweisend eine erste, luftdichte Materialschicht, eine davon beabstandete zweite, luftdichte Materialschicht, mindestens ein zwischen der ersten Materialschicht und der zweiten Materialschicht angeordnetes, luftdurchlässiges Isolierelement, mindestens einen Lufteinlass, und mindestens einen Luftauslass, wobei das Isolierelement dazu ausgebildet ist, zumindest stellenweise einen Abstand zwischen der ersten Materialschicht und der zweiten Materialschicht auf einen vorbestimmten Wert zu begrenzen, und wobei der mindestens eine Lufteinlass und der mindestens eine Luftauslass an voneinander beabstandeten Bereichen des Isolierelements angeordnet sind und dazu ausgebildet sind, Luft durch den mindestens einen Lufteinlass in das Isolierelement einzuleiten und aus dem mindestens einen Luftauslass wieder auszuleiten.

Die erste und die zweite Materialschicht bilden eine Begrenzung der Isolierungsanordnung in einer Dickenrichtung, die im installierten Zustand der Isolierungsanordnung radial zu dem Rumpf verläuft, wenn die Isolierungsanordnung auf der Rumpfinnenseite angebracht ist. Der Abstand der ersten und der zweiten Materialschicht sowie ihre Materialstärke definieren folglich die Dicke der Isolierungsanordnung, wenn diese in Benutzung ist. Es ist bevorzugt, wenn die Isolierungsanordnung der einer herkömmlichen Isolierungsanordnung entspricht. Es ist weiterhin denkbar, dass die erfindungsgemäße Isolierungsanordnung eine Dicke aufweist, die der Dicke einer Kombination aus einem Primär- und einem Sekundärisolierungspakets entspricht.

Die Materialschichten sind bevorzugt zugfest ausgeführt, sodass eine Dehnung des Materials der beiden Materialschichten beim Beaufschlagen ihres Zwischenraums verhindert wird. Dennoch ist bevorzugt, dass die beiden Materialschichten biegeweich sind, sodass sich die Isolierungsanordnung dem zur Verfügung stehenden Bauraum optimal anpassen kann. Die Materialschichten können als luftdichte Textilschichten, Folien, Gewebe und Kombinationen hiervon ausgebildet sein.

Zwischen den beiden Materialschichten ist das luftdurchlässige Isolierelement angeordnet. Dieses kann auf mehrere unterschiedliche Arten ausgeführt sein. Es dient dazu, einen Luftstrom zwischen dem mindestens einen Lufteinlass und dem mindestens einen Luftauslass zu ermöglichen und hierbei einen Abstand der beiden Materialschichten auf den vorbestimmten Wert zu begrenzen. Hierzu kann das Isolierelement einen oder mehrere einzelne oder miteinander verbundene Hohlräume aufweisen, durch die eine Fluidverbindung zwischen dem mindestens einen Lufteinlass und dem mindestens einen Luftauslass hergestellt wird. Luft, die durch den mindestens einen Lufteinlass in das Isolierelement eingeleitet wird, strömt folglich durch die Fluidverbindung zu dem mindestens einen Luftauslass. Hierzu ist eine ausreichende Druckdifferenz über der Fluidverbindung notwendig, die durch einen gewissen Überdruck an dem mindestens einen Lufteinlass erreicht werden kann.

Das Isolierelement erfüllt demnach die Funktion des thermischen und akustischen Isolierens durch das Beabstanden der ersten und der zweiten Materialschicht voneinander, sowie der Leitung von Luft von dem mindestens einen Lufteinlass zu dem mindestens einen Luftauslass. Die Isolierungsanordnung erfüllt folglich zusätzlich die Funktion einer Steigleitung, sodass diese in Form eines separaten Bauteils nicht mehr notwendig ist.

Die Isolierungsanordnung kann dazu ausgebildet sein, in ein vorbestimmtes Spantfeld integriert zu werden, das als ein Hautabschnitt der Rumpfwandung zu verstehen ist, der zwischen zwei aufeinanderfolgenden Spanten liegt. Parallel zu den Spanten verlaufende Kanten der beiden Materialschichten können miteinander verbunden sein, sodass eine zu den Spanten hin gewandte, geschlossene Kante oder ein geschlossener Rand gebildet wird. Die beiden Materialschichten bilden damit eine Art flachen, mattenartig geformten Schlauch aus, von dem das Isolierelement eingeschlossen ist.

Die Isolierungsanordnung kann bevorzugt von einer Unterkante zu einer Oberkante hin durchströmt werden. Dabei ist die Unterkante eine Kante der Isolierungsanordnung, die im installierten Zustand in der Nähe eines Kabinenfußbodens angeordnet ist. Die Unterkante kann an dem entgegengesetzten Ende sein und im installierten Zustand in der Nähe eines Über-Kopf-Staufachs oder einer dafür vorgesehenen Installationsposition vorliegen. Die zwischen der Unterkante und der Oberkante verlaufenden Längskanten sind dabei luftdicht verschlossen.

Im Wesentlichen kann die Isolierungsanordnung einer derartigen Ausführung eine rechteckige Grundfläche aufweisen, wobei die beiden Längskanten parallel zu den Spanten angeordnet werden und die beiden stirnseitigen Kanten, d.h. die Oberkante und die Unterkante, an den Fußboden angrenzen bzw. eine obere Begrenzung darstellen. Selbstverständlich sind andere Varianten denkbar, die nicht auf ein einzelnes Spantfeld begrenzt sind, sondern auch mehrere Spantfelder umfassen und die dazwischenliegenden Spanten umgeben können.

Ein Vorteil wird dahingehend erzielt, dass Kosten durch Wegfall einer separaten Steigleitung reduziert werden. Weiterhin ergeben sich deutliche Gewichtsvorteile sowie eine vereinfachte und beschleunigte Handhabung bei der Installation. Durch die Verwendung biegeweicher Materialien kann praktisch die gesamte Isolierungsanordnung gefaltet oder gerollt und von außerhalb in die Passagierkabine gebracht und dort installiert werden. Zur Installation können unterschiedliche Haltevorrichtungen verwendet werden, die eine Verbindung zwischen der Isolierungsanordnung und einer Rumpfwandung und/oder eines Verkleidungsbauteils schaffen.

Gemäß der Erfindung umfasst das Isolierelement biegeweiche, zugfeste Verbindungselemente, die mit der ersten Materialschicht und der zweiten Materialschicht verbunden sind. Die Verbindungselemente können mit der ersten Materialschicht und der zweiten Materialschicht verbunden sein, sodass dort, wo das Verbindungselement angeordnet ist, der Abstand zwischen der ersten Materialschicht und der zweiten Materialschicht begrenzt wird. Es ist vorstellbar, dass mehrere Verbindungselemente über die Fläche der ersten Materialschicht und der zweiten Materialschicht verteilt sind. Bevorzugt können die Verbindungselemente in einem regelmäßigen Raster angeordnet sein. Die Verbindungselemente können sich senkrecht zu einer lokalen Oberflächentangente der betreffenden Materialschicht erstrecken, schräge Anordnungen sind jedoch auch denkbar. Die Verwendung biegeweicher Verbindungselemente ermöglicht eine Kompaktierung, d.h. ein Zusammenfalten oder Rollen der Isolierungsanordnung sowie eine bei der Beaufschlagung des Isolierelements mit einem entsprechenden Überdruck belastungsgerechte Ausrichtung der Verbindungselemente. Durch die einzelnen Verbindungselemente können bereichsweise Kanalstrukturen ausgebildet sein. Mehrere Kanalstrukturen können miteinander in Verbindung stehen. In einem denkbaren Fall kann ein räumliches Gitter mit einer Vielzahl von parallel zueinander ausgerichteten oder schrägen bzw. gekreuzten Verbindungselementen hergestellt werden.

In einer vorteilhaften Ausführungsform bestehen die Verbindungselemente aus einem textilen Material. Das textile Material könnte dem Material der ersten Materialschicht und/oder der zweiten Materialschicht entsprechen. Es ist allerdings nicht notwendig, dass die Verbindungselemente selbst luftdicht sind. Die Verbindungselemente sollten eine so ausreichende Zugfestigkeit aufweisen, dass der Abstand zwischen den beiden Materialschichten beim Beaufschlagen des Isolierelements mit einem Überdruck zuverlässig begrenzt wird.

In einer vorteilhaften Ausführungsform verlaufen die Verbindungselemente zumindest bereichsweise parallel zueinander. Die Verbindungselemente könnten etwa als längliche, streifenartige Elemente ausgeführt sein, deren Längskanten jeweils mit einer der beiden Materialschichten verbunden ist. Die Verbindungselemente können folglich zumindest bereichsweise für eine Unterteilung des Isolierelements verwendet werden.

In einer vorteilhaften Ausführungsform weist das Isolierelement einen Schaumstoff auf. Der Schaumstoff könnte biegeweich ausgeführt sein und sich flächig zwischen den beiden Materialschichten erstrecken. Der Schaumstoff könnte zumindest bereichsweise mit zumindest einer der beiden Materialschichten verbunden sein, sodass sich eine zusammenhängende Einheit ergibt.

In einer vorteilhaften Ausführungsform ist der Schaumstoff offenporig. Der Schaumstoff ist folglich luftdurchlässig. Er verhindert das Durchströmen des Isolierelements nicht, sondern stellt eine Fluidverbindung zwischen dem mindestens einen Lufteinlass und dem mindestens einen Luftauslass bereit. Es ist vorstellbar, dass der Schaumstoff den zur Verfügung stehenden Raum zwischen den Materialschichten vollständig ausfüllt. Liegt an einem Ende des Schaumstoffs ein Überdruck an, kann Luft durch den Schaumstoff bis zu einem gegenüberliegenden Ende strömen und dort in dem mindestens einen Luftauslass geraten.

In einer vorteilhaften Ausführungsform weist das Isolierelement mindestens eine Aussparung auf, die in dem Schaumstoff oder zwischen dem Schaumstoff und mindestens einer der ersten Materialschicht und der zweiten Materialschicht angeordnet ist. In einer Variante könnte der Schaumstoff vollflächig auf einer der beiden Materialschichten angebracht sein. Zwischen dem Schaumstoff und der anderen Materialschicht kann ein Zwischenraum verbleiben, sodass dort Luft strömen kann. Es ist allerdings auch denkbar, dass in den Schaumstoff eine oder mehrere Aussparungen vorliegen, die sich von dem mindestens einen Lufteinlass zu dem mindestens einen Luftauslass erstrecken. So werden einfach durch das Aussparen von Material einzelne Luftkanäle realisiert. Eine Kombination hiervon ist selbstverständlich denkbar.

In einer vorteilhaften Ausführungsform weist der mindestens eine Lufteinlass und/oder der mindestens eine Luftauslass ein schlauch- oder röhrenartiges Element auf, das an eine Unterkante oder eine Oberkante des Isolierelements anschließt. Der mindestens eine Lufteinlass könnte als einzelnes Bauteil vorgesehen sein, das an der Unterkante der Isolierungsanordnung angeordnet und mit den beiden Materialschichten verbunden ist. Luft könnte beispielsweise quer zu der eigentlich vorgesehenen Strömungsrichtung in den mindestens einen Lufteinlass eingeleitet werden, um dort in das Isolierelement zu strömen. An einem analog dazu geformten mindestens einen Luftauslass kann ebenso eine Umlenkung der Strömung erfolgen. Der mindestens eine Lufteinlass oder Luftauslass könnte eine Längserstreckung mit einem gleichbleibenden Querschnitt aufweisen, wobei die Längserstreckung parallel zu der Unterkante bzw. Oberkante verläuft.

In einer vorteilhaften Ausführungsform weist die Isolierungsanordnung ferner mehrere Klettverbinder auf, die außen an mindestens einer der ersten Materialschicht und der zweiten Materialschicht angeordnet und dazu ausgebildet sind, die Isolierungsanordnung an der Wandung des Flugzeugs und/oder einem Verkleidungselement zu befestigen. Es können mehrere Klettverbinder über die erste und/oder zweite Materialschicht verteilt werden. Entsprechende Ausführungen mit Flausch- und Hakenband oder zwei kongruent geformte Pilzkopfbänder sind denkbar. Für Wartungszwecke kann die Isolierungsanordnung sehr einfach entnommen und wieder installiert werden.

In einer vorteilhaften Ausführungsform ist die Isolierungsanordnung flexibel und wird bei einem Überdruck an dem mindestens einen Lufteinlass bis zum Erreichen einer vorgesehenen Endform aufgeblasen. Dadurch kann die Montage erleichtert werden, insbesondere von dem Verkleidungselement, das die Isolierungsanordnung mit der Rumpfwand zusammen einschließt. Die Isolierungsanordnung weist bei ihrer Installation eine kompaktierte Form auf, die erst bei Benutzung auf ein vorgesehenes Maß vergrößert wird.

In einer vorteilhaften Ausführungsform ist die Isolierungsanordnung aufrollbar. Dies vereinfacht erheblich die Handhabung der Isolierungsanordnung, da sie vor der Installation kompaktiert in die auszustattende Passagierkabine hineingetragen und dort abgerollt werden kann. Es ist insbesondere denkbar, bei der Ausstattung mehrerer einzelner, aufeinanderfolgender Spantfelder eine größere Isolierungsanordnung zu verwenden, die nach einem Abrollen mehrere Spantfelder und die dazwischenliegenden Spante überdecken kann.

Es ist weiterhin denkbar, die Isolierungsanordnung mit einem oder mehreren Temperatursensoren auszustatten, die an dem mindestens einen Lufteinlass und/oder an dem mindestens einen Luftauslass oder dazwischen angeordnet sein können. Der oder die Temperatursensoren können mit einem Klimatisierungssystem verbunden sein und können zur Erfassung von Temperaturen in der Isolierungsanordnung verwendet werden. Die Temperaturen können innerhalb des durch die Isolierungsanordnung fließenden Luftstroms oder an einer Außenseite der Isolierungsanordnung erfasst und gegebenenfalls zur Regelung einer Temperatur der in den mindestens einen Lufteinlass fließenden Luft verwendet werden.

Die Isolierungsanordnung kann bei Bedarf bzw. optional mehrere Lufteinlässe umfassen. Über unterschiedliche Strömungsgeschwindigkeiten mehrerer, eingeleiteter Luftströme und angepasste Verläufe der warmen Luftströmung in dem Isolierelement kann eine gleichmäßige, für einen Passagier angenehme Temperatur an einer zu der Kabine gerichteten Seite erreicht werden. Dabei können unterschiedliche Strömungsgeschwindigkeiten innerhalb des Isolierelements realisiert werden, indem etwa eine dichtere Schaumstofflage an einer zur Kabine gerichteten Seite angeordnet ist. Höhere Strömungsgeschwindigkeiten können auf einer zu der Rumpfwandung gerichteten Seite hin vorgesehen werden, da dort während des Flugs aufgrund der kalten Rumpfwandung eine stärkere Abfuhr von Wärme erfolgt.

Die Erfindung betrifft ferner ein Flugzeug, aufweisend einen Rumpf mit einer Rumpfwandung sowie mindestens eine Isolierungsanordnung gemäß der vorhergehenden Beschreibung. Das Flugzeug kann insbesondere ein Verkehrsflugzeug sein, welches einen Druckrumpf mit einer klimatisierbaren Kabine aufweist.

In einer vorteilhaften Ausführungsform des Flugzeugs ist die Isolierungsanordnung dazu ausgebildet, ein Spantfeld zwischen zwei aufeinanderfolgenden Spanten des Rumpfs auszufüllen.

In einer weiteren vorteilhaften Ausführungsform des Flugzeugs ist die Isolierungsanordnung dazu ausgebildet, mehrere aufeinanderfolgende Spantfelder und die dazwischenliegenden Spante abzudecken.

In einer ebenfalls vorteilhaften Ausführungsform ist der mindestens eine Lufteinlass der Isolierungsanordnung mit einer Luftzufuhr eines Klimatisierungssystems verbunden, wobei der mindestens eine Luftauslass mit einem Kabinenluftauslass zum Einleiten von Luft in eine Kabine des Flugzeugs verbunden ist.

Das Klimatisierungssystem könnte ein zapfluftbasiertes Klimatisierungssystem sein. Es ist denkbar, zumindest einen Teil der erforderlichen Kühlleistung zum Kühlen von Zapfluft durch die Isolierungsanordnung bereitzustellen. Hierfür wird entsprechend warme Luft, beispielsweise aus einer Mischereinheit oder damit gekoppelten Komponenten des Klimatisierungssystems, direkt in die Isolierungsanordnung geleitet, welche sich beim Durchströmen an der im Flug kühleren Rumpfwandung abkühlt. Damit kann folglich der Rumpf des Flugzeugs zu einem Wärmetauscher mit entsprechend großer Oberfläche und hoher Effizienz genutzt werden.

Aufgrund der großen aktiven Oberfläche zum Wärmeaustausch können entsprechende Komponenten des Klimatisierungssystems kleiner dimensioniert werden. Die Innenseite des Isolierelements kann zudem durch die vergleichsweise warme einströmende Luft für eine höhere Wandtemperatur an der Innenseite der Verkleidung der Kabine sorgen, die an die Isolieranordnung angrenzt, sodass dadurch ein angenehmeres Raumklima entstehen kann. Höhere Volumenströme und/oder höhere Lufttemperaturen könnten an einer zu der Rumpfwandung hin gerichteten Seite vorgesehen werden. Neben einem einzelnen Lufteinlass könnten hierzu auch mehrere Lufteinlässe vorgesehen sein, die unterschiedliche Luftströme in das Isolierelement vorsehen. Ist eine aktive Kühlung der Kabine erforderlich, kann dies durch überwiegendes Einleiten von Kaltluft erfolgen.

Durch eine derartige Konzeption und Verwendung der Isolieranordnung kann eine Gesamtoptimierung des Kabinenklimas erfolgen. Da die in der Isolierungsanordnung eintretenden Strömungsgeschwindigkeiten dank des vergleichsweise großen Strömungsquerschnitts im Vergleich zu herkömmlichen Steigleitungen relativ gering sind und die biegeweiche Ausgestaltung der Isolierungsanordnung keinen Körperschall leitet, ist mit geringeren Geräuschen als in herkömmlichen Steigleitungen zu rechnen.

An einer Innenseite der Isolieranordnung, die zu der Kabine gerichtet ist, können elektrische Leitungen angeordnet werden, etwa in Form von gedruckten Leiterbahnen auf einer entsprechenden, biegeweichen Trägerfolie. Die Trägerfolie ist beispielsweise mit Klebstoff, Klebeband oder Klettverbindern an der Isolierungsanordnung einfach befestigbar. Separate Halter zum Haltern von elektrischen Leitungen könnten dadurch eingespart werden.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1 und 2: schematische Darstellungen einer Isolierungsanordnung gemäß einem Ausführungsbeispiel.
- Fig. 3a-3b: schematische Detaildarstellungen eines Ausführungsbeispiel des Isolierelements.
- Fig. 4a-4b: schematische Detaildarstellungen eines weiteren Ausführungsbeispiel des Isolierelements.
- Fig. 5: eine schematische Darstellung eines Flugzeugs mit einer darin integrierten Isolierungsanordnung.

### Detaillierte Beschreibung von Ausführungsbeispielen

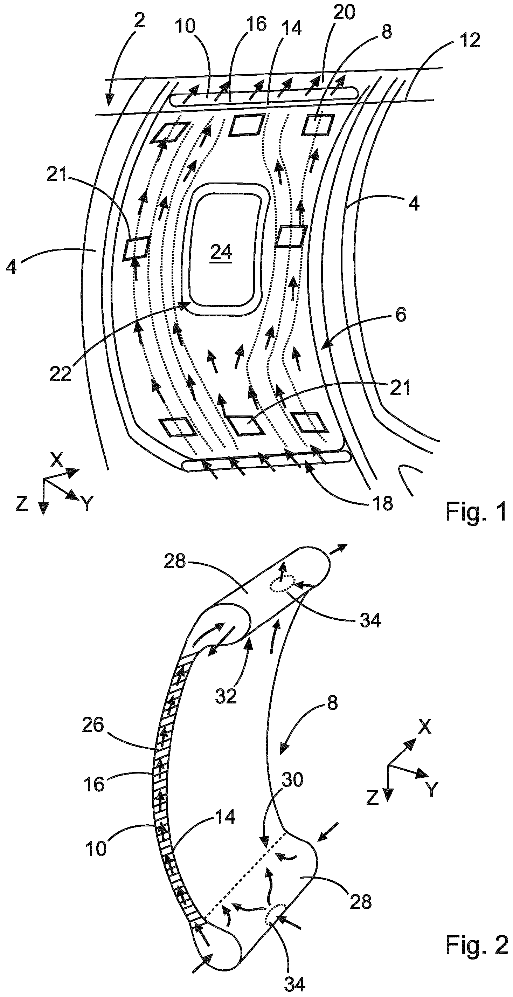

Fig. 1 zeigt eine Rumpfstruktur 2 mit zwei voneinander beabstandeten Spanten 4, die ein Spantfeld 6 zwischen sich einschließen. In dem Spantfeld 6, d.h. zwischen den beiden Rumpfspanten 4, befindet sich eine Isolierungsanordnung 8. Diese umfasst eine erste luftdichte Materialschicht 10, die an einer Rumpfwandung 12 angeordnet ist. Eine zweite luftdichte Materialschicht 14 befindet sich in einem Abstand von der ersten Materialschicht 10 und ist nach innen, d.h. in Richtung einer in der Rumpfstruktur 2 auszubildenden Kabine gerichtet. Zwischen der ersten Materialschicht 10 und der zweiten Materialschicht 14 ist ein Isolierelement 16 angeordnet, das einen Lufteinlass 18 und einen Luftauslass 20 aufweist.

Das Isolierelement 16 ist luftdurchlässig, sodass in den Lufteinlass 18 strömende Luft durch das Isolierelement 16 zu dem Luftauslass 20 strömt. Da die beiden Materialschichten 10 und 14 luftdicht sind, ist die eingeleitete Luft bei entsprechender Druckdifferenz gezwungen, aus dem Luftauslass 20 zu strömen.

Die Isolierungsanordnung 8 ist sehr flexibel gestaltbar und kann der Form der Rumpfstruktur 2 bzw. der Rumpfwandung 12 folgen. Eine Anpassung an besondere geometrische Merkmale ist vorteilhafterweise möglich. So kann eine Fensteröffnung 22 für ein in der Rumpfstruktur 2 angeordnetes Kabinenfenster 24 vorgesehen werden, welches bei Nutzung der Isolierungsanordnung 8 von der Luftströmung passiert wird.

In diesem Beispiel, welches in Fig. 2 in einer schräg seitlichen Perspektive gezeigt ist, ist das Isolierelement 16 als Schaumstoff 26 ausgeführt. Der Schaumstoff 26 ist offenporig, sodass durch die Verbindung der einzelnen Poren miteinander und mit Randflächen des Schaumstoffs 26 eine Fluidverbindung zwischen dem Lufteinlass 18 und dem Luftauslass 20 vorliegt. Gleichzeitig ist der Schaumstoff 26 biegeweich und führt zu einer sehr guten Anpassung seiner Form an die Rumpfwandung 12.

Wie in Fig. 2 dargestellt, können der Lufteinlass 18 und der Luftauslass 20 jeweils durch ein schlauchartiges Element 28 realisiert werden, das sich entlang einer Unterkante 30 oder einer Oberkante 32 der Isolierungsanordnung 8 erstreckt. Luft kann quer zu einer Erstreckungsrichtung des schlauchartigen Elements 28 eingeleitet werden, wie durch Öffnungen 34 angedeutet. An diese Öffnungen 34 können jeweils separate Leitungen angeschlossen werden. Alternativ oder zusätzlich dazu kann ein Einströmen bzw. ein Ausströmen in einer Richtung parallel zu der Unterkante 30 bzw. der Oberkante 32 durch eine seitliche Öffnung des Querschnitts des Lufteinlasses 18 bzw. des Luftauslasses 20 erfolgen.

Der Schaumstoff 26 ist hier beispielhaft mit der ersten Materialschicht 10 und der zweiten Materialschicht 14 verbunden und dazu ausgebildet, dass zumindest stellenweise ein Abstand zwischen der ersten Materialschicht 10 und der zweiten Materialschicht 14 begrenzt wird. Wird folglich Luft in den Lufteinlass 18 eingeleitet, wird der Raum zwischen der ersten Materialschicht 10 und der zweiten Materialschicht 14 mit einem Druck beaufschlagt, sodass die Isolierungsanordnung 8 leicht expandiert bzw. aufgeblasen wird. Das Isolierelement 16 begrenzt dabei die Dicke der Isolierungsanordnung 8, sodass eine Art Isoliermatte mit einer definierten Dicke resultiert.

Der Schaumstoff 26 könnte etwa Polyurethan sein. Das Raumgewicht ist zur Anwendung in einem Flugzeug möglichst niedrig. Weiterhin ist sinnvoll, mögliche grobe Poren einzusetzen, sodass eventuell entstehendes Kondenswasser leicht abtropfen kann. Hierzu könnte die erste und/oder die zweite Materialschicht wasser- bzw. dampfdurchlässig sein oder der Lufteinlass 18 zum Abfließen ausgebildet sein.

Eine Befestigung der Isolierungsanordnung 8 an der Rumpfwandung 12 bzw. einem hier nicht gezeigten Verkleidungselement kann über mehrere Klettverbinder 21 erfolgen. Diese können flächig über zumindest eine der beiden Materialschichten 10 und 14 verteilt sein.

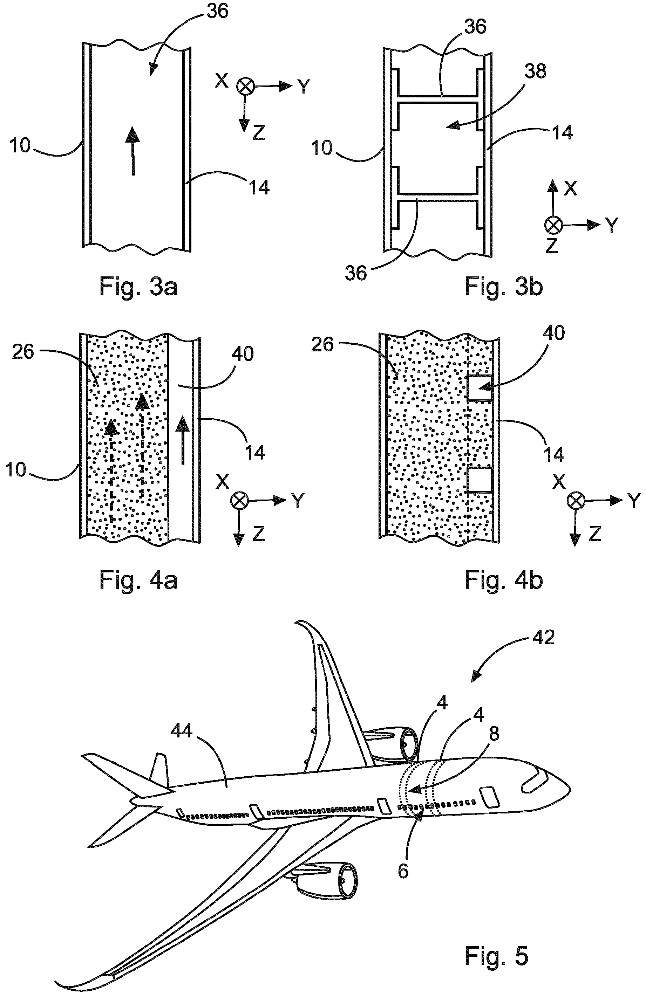

Wie in den Fig. 3a und 3b gezeigt, kann statt eines Schaumstoffs 26 auch eine Anordnung von Verbindungselementen 36 eingesetzt werden. Wie anhand der angegebenen Koordinatensysteme ersichtlich, zeigt Fig. 3a einen Seitenschnitt und Fig. 3b eine Draufsicht auf eine waagerechte Schnittebene in der Isolierungsanordnung 8. Die Verbindungselemente 36 können als Textilstreifen realisiert werden, die zugfest ausgebildet sind und bei einem Überdruck innerhalb eines Innenraums 38 zwischen den Materialschichten 10 und 14 straff gespannt werden und dadurch den Abstand der Materialschichten 10 und 14 zueinander begrenzen. Hierdurch werden mehrere, beispielsweise parallel zueinander angeordnete Strömungskanäle realisiert, die sich von dem Lufteinlass 18 zu dem Luftauslass 20 hin erstrecken.

In den Fig. 4a und 4b wird eine weitere Variante gezeigt, bei der ebenso ein Schaumstoff 26 vorgesehen ist, der jedoch mehrere, darin oder daneben integrierte Strömungskanäle 40 aufweist. Diese können durch Aussparen von Material in dem Schaumstoff 26 realisiert werden. Es ist vorstellbar, wie durch die gestrichelten Linien in Fig. 4b angedeutet, größere Bereiche völlig frei von Schaumstoff 26 vorzusehen. Es könnte indes auch eine Anordnung von mehreren, parallel zueinander verlaufenden Strömungskanälen 40 mit kleineren Querschnitten realisiert werden. Eine Kombination aus Verbindungselementen 36 und dem Schaumstoff 26 ist selbstverständlich denkbar.

Fig. 5 zeigt schließlich ein Flugzeug 42, das einen Rumpf 44 mit der darin ausgebildeten Rumpfstruktur 2 mit mehreren Spanten 4 aufweist. Selbstverständlich sind andere Rumpfstrukturen 2 denkbar und die Anordnung von Spanten 4 soll nicht als Beschränkung verstanden werden. Die Isolierungsanordnung 8 kann sich an der Rumpfstruktur 2 befinden, beispielsweise an einem oder mehreren Spantfeldern 6. Falls gewünscht, kann die Isolierungsanordnung 8 derart dimensioniert sein, dass sie sich über eine signifikante Länge der Rumpfstruktur 2 erstreckt und hierbei nicht nur Spantfelder 6, sondern auch die Spanten 4 abdeckt.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Isolierungsanordnung (8) zum thermischen und akustischen Isolieren einer Wandung (12) eines Flugzeugs (42), aufweisend:
eine erste, luftdichte Materialschicht (10),
eine davon beabstandete zweite, luftdichte Materialschicht (14),
mindestens ein zwischen der ersten Materialschicht (10) und der zweiten Materialschicht (14) angeordnetes, luftdurchlässiges Isolierelement (16),
mindestens einen Lufteinlass (18), und
mindestens einen Luftauslass (20),
wobei das Isolierelement (16) dazu ausgebildet ist, zumindest stellenweise einen Abstand zwischen der ersten Materialschicht (10) und der zweiten Materialschicht (14) auf einen vorbestimmten Wert zu begrenzen, und wobei das Isolierelement (16) biegeweiche, zugfeste Verbindungselemente (36) umfasst, die mit der ersten Materialschicht (10) und der zweiten Materialschicht (14) verbunden sind,
wobei der mindestens eine Lufteinlass (18) und der mindestens eine Luftauslass (20) an voneinander beabstandeten Bereichen des Isolierelements (16) angeordnet sind und dazu ausgebildet sind, Luft durch den mindestens einen Lufteinlass (18) in das Isolierelement (16) einzuleiten und aus dem mindestens einen Luftauslass (20) wieder auszuleiten.

2. Isolierungsanordnung (8) nach Anspruch 1,
wobei die Verbindungselemente (36) aus einem textilen Material bestehen.

3. Isolierungsanordnung (8) nach Anspruch 1 oder 2,
wobei die Verbindungselemente (36) zumindest bereichsweise parallel zueinander verlaufen.

4. Isolierungsanordnung (8) nach einem der vorhergehenden Ansprüche, wobei das Isolierelement (16) einen Schaumstoff (26) aufweist.

5. Isolierungsanordnung (8) nach Anspruch 4,
wobei der Schaumstoff (26) offenporig ist.

6. Isolierungsanordnung (8) nach Anspruch 4 oder 5,
wobei das Isolierelement (26) mindestens eine Aussparung (40) aufweist, die in dem Schaumstoff (26) oder zwischen dem Schaumstoff (26) und mindestens einer der ersten Materialschicht (10) und der zweiten Materialschicht (14) angeordnet ist.

7. Isolierungsanordnung (8) nach einem der vorhergehenden Ansprüche,
wobei der mindestens eine Lufteinlass (18) und/oder der mindestens eine Luftauslass (14) ein schlauch- oder röhrenartiges Element (28) aufweist, das an eine Unterkante (30) oder eine Oberkante (32) des Isolierelements (16) anschließt.

8. Isolierungsanordnung (8) nach einem der vorhergehenden Ansprüche,
ferner aufweisend mehrere Klettverbinder (21), die außen an mindestens einer der ersten Materialschicht (10) und der zweiten Materialschicht (14) angeordnet und dazu ausgebildet sind, die Isolierungsanordnung (8) an der Wandung (12) des Flugzeugs (42) und/oder einem Verkleidungselement zu befestigen.

9. Isolierungsanordnung (8) nach einem der vorhergehenden Ansprüche,
wobei die Isolierungsanordnung (8) flexibel ist und bei einem Überdruck an dem mindestens einen Lufteinlass (18) bis zum Erreichen einer vorgesehenen Endform aufgeblasen wird.

10. Isolierungsanordnung (8) nach einem der vorhergehenden Ansprüche,
wobei die Isolierungsanordnung (8) aufrollbar ist.

11. Flugzeug (42), aufweisend einen Rumpf (44) mit einer Rumpfwandung (12) und einer Rumpfstruktur (2) sowie mindestens eine Isolierungsanordnung (8) nach einem der vorhergehenden Ansprüche.

12. Flugzeug (42) nach Anspruch 11,
wobei die Isolierungsanordnung (8) dazu ausgebildet ist, ein Spantfeld (6) zwischen zwei aufeinanderfolgenden Spanten (4) der Rumpfstruktur (2) auszufüllen.

13. Flugzeug (42) nach Anspruch 11 oder 12,
wobei die Isolierungsanordnung (8) dazu ausgebildet ist, mehrere aufeinanderfolgende Spantfelder (6) und die dazwischenliegenden Spanten (4) abzudecken.

14. Flugzeug (42) nach einem der Ansprüche 11 bis 13,
wobei der mindestens eine Lufteinlass (18) der Isolierungsanordnung (8) mit einer Luftzufuhr eines Klimatisierungssystems verbunden ist, und
wobei der mindestens eine Luftauslass (20) mit einem Kabinenluftauslass zum Einleiten von Luft in eine Kabine des Flugzeugs (42) verbunden ist.

## Claims

1. An insulation arrangement (8) for thermally and acoustically insulating a wall (12) of an aircraft (42), comprising:
a first, airtight material layer (10),
a second, airtight material layer (14) spaced apart therefrom,
at least one air-permeable insulating element (16) arranged between the first material layer (10) and the second material layer (14),
at least one air inlet (18), and
at least one air outlet (20),
wherein the insulating element (16) is configured to limit a distance between the first material layer (10) and the second material layer (14) to a predetermined value at least in places, and wherein the insulating element (16) comprises flexible, tension-resistant connecting elements (36) which are connected to the first material layer (10) and the second material layer (14),
wherein the at least one air inlet (18) and the at least one air outlet (20) are arranged at regions of the insulating element (16) spaced apart from one another and are configured to introduce air through the at least one air inlet (18) into the insulating element (16) and to discharge it again from the at least one air outlet (20).

2. The insulation arrangement (8) according to claim 1,
wherein the connecting elements (36) are made of a textile material.

3. The insulation arrangement (8) according to claim 1 or 2,
wherein the connecting elements (36) run parallel to one another at least in some areas.

4. The insulation arrangement (8) according to one of the preceding claims,
wherein the insulating element (16) comprises a foam material (26).

5. The insulation arrangement (8) according to claim 4,
wherein the foam material (26) is open-pored.

6. The insulation arrangement (8) according to claim 4 or 5,
wherein the insulating element (26) comprises at least one recess (40) which is arranged in the foam material (26) or between the foam material (26) and at least one of the first material layer (10) and the second material layer (14).

7. The insulation arrangement (8) according to one of the preceding claims,
wherein the at least one air inlet (18) and/or the at least one air outlet (14) comprises a hose-like or tubular element (28) which adjoins a lower edge (30) or an upper edge (32) of the insulating element (16).

8. The insulation arrangement (8) according to one of the preceding claims,
further comprising several hook-and-loop fasteners (21) which are arranged externally on at least one of the first material layer (10) and the second material layer (14) and are configured to fasten the insulation arrangement (8) to the wall (12) of the aircraft (42) and/or to a lining element.

9. The insulation arrangement (8) according to one of the preceding claims,
wherein the insulation arrangement (8) is flexible and is inflated in the event of an overpressure at the at least one air inlet (18) until an intended final shape is reached.

10. The insulation arrangement (8) according to one of the preceding claims,
wherein the insulation arrangement (8) is rollable.

11. An aircraft (42), comprising a fuselage (44) with a fuselage wall (12) and a fuselage structure (2) and at least one insulation arrangement (8) according to one of the preceding claims.

12. The aircraft (42) according to claim 11,
wherein the insulation arrangement (8) is configured to fill a frame field (6) between two consecutive frames (4) of the fuselage structure (2).

13. The aircraft (42) according to claim 11 or 12,
wherein the insulation arrangement (8) is configured to cover a plurality of consecutive frame fields (6) and the intermediate frames (4).

14. The aircraft (42) according to one of claims 11 to 13,
wherein the at least one air inlet (18) of the insulation arrangement (8) is connected to an air supply of an air-conditioning system, and
wherein the at least one air outlet (20) is connected to a cabin air outlet for introducing air into a cabin of the aircraft (42).

## Revendications

1. Arrangement d'isolation (8) pour l'isolation thermique et acoustique d'une paroi (12) d'un aéronef (42), présentant :
une première couche de matériau (10) étanche à l'air,
une deuxième couche de matériau (14) étanche à l'air espacée de celle-ci,
au moins un élément d'isolation (16) perméable à l'air disposé entre la première couche de matériau (10) et la deuxième couche de matériau (14),
au moins une entrée d'air (18), et
au moins une sortie d'air (20),
dans lequel l'élément d'isolation (16) est configuré pour limiter au moins par endroits une distance entre la première couche de matériau (10) et la deuxième couche de matériau (14) à une valeur prédéterminée, et dans lequel l'élément d'isolation (16) comprend des éléments de liaison (36) souples, résistants à la traction, qui sont reliés à la première couche de matériau (10) et à la deuxième couche de matériau (14),
dans lequel l'au moins une entrée d'air (18) et l'au moins une sortie d'air (20) sont disposées au niveau de régions espacées l'une de l'autre de l'élément d'isolation (16) et sont configurées pour introduire de l'air à travers l'au moins une entrée d'air (18) dans l'élément d'isolation (16) et pour le faire sortir par l'au moins une sortie d'air (20).

2. Arrangement d'isolation (8) selon la revendication 1,
dans lequel les éléments de liaison (36) sont constitués d'un matériau textile.

3. Arrangement d'isolation (8) selon la revendication 1 ou 2,
dans lequel les éléments de liaison (36) s'étendent au moins par endroits parallèlement les uns aux autres.

4. Arrangement d'isolation (8) selon l'une quelconque des revendications précédentes,
dans lequel l'élément d'isolation (16) présente une mousse (26).

5. Arrangement d'isolation (8) selon la revendication 4,
dans lequel la mousse (26) est à pores ouverts.

6. Arrangement d'isolation (8) selon la revendication 4 ou 5,
dans lequel l'élément d'isolation (26) présente au moins un évidement (40) qui est disposé dans la mousse (26) ou entre la mousse (26) et au moins l'une de la première couche de matériau (10) et de la deuxième couche de matériau (14).

7. Arrangement d'isolation (8) selon l'une quelconque des revendications précédentes,
dans lequel l'au moins une entrée d'air (18) et/ou l'au moins une sortie d'air (14) présente un élément de type tuyau ou tube (28) qui se raccorde à un bord inférieur (30) ou à un bord supérieur (32) de l'élément d'isolation (16).

8. Arrangement d'isolation (8) selon l'une quelconque des revendications précédentes,
présentant en outre plusieurs raccords auto-agrippants (21) qui sont disposés à l'extérieur sur au moins l'une de la première couche de matériau (10) et de la deuxième couche de matériau (14) et qui sont configurés pour fixer l'arrangement d'isolation (8) à la paroi (12) de l'aéronef (42) et/ou à un élément de revêtement.

9. Arrangement d'isolation (8) selon l'une quelconque des revendications précédentes,
dans lequel l'arrangement d'isolation (8) est flexible et est gonflé en cas de surpression au niveau de l'au moins une entrée d'air (18) jusqu'à atteindre une forme finale prévue.

10. Arrangement d'isolation (8) selon l'une quelconque des revendications précédentes,
dans lequel l'arrangement d'isolation (8) est enroulable.

11. Aéronef (42), ayant un fuselage (44) avec une paroi de fuselage (12) et avec une structure de fuselage (2) ainsi qu'au moins un arrangement d'isolation (8) selon l'une quelconque des revendications précédentes.

12. Aéronef (42) selon la revendication 11,
dans lequel l'arrangement d'isolation (8) est configuré pour remplir un champ de cadre (6) entre deux cadres (4) consécutifs de la structure de fuselage (2).

13. Aéronef (42) selon la revendication 11 ou 12,
dans lequel l'arrangement d'isolation (8) est configuré pour recouvrir plusieurs champs de cadre (6) consécutifs et les cadres (4) intermédiaires.

14. Aéronef (42) selon l'une quelconque des revendications 11 à 13,
dans lequel l'au moins une entrée d'air (18) de l'arrangement d'isolation (8) est reliée à une alimentation en air d'un système de climatisation, et
dans lequel l'au moins une sortie d'air (20) est reliée à une sortie d'air de cabine pour introduire de l'air dans une cabine de l'aéronef (42).
